# EUROPEAN PATENT APPLICATION

(11) **EP 4 811 527 A1**
(43) Date of publication of application: **23.09.2026**
(21) Application number: 25824530.7
(22) Date of filing: 26.03.2025
(51) Int. Cl.: H01M 50/451, H01M 50/446, H01M 50/403, H01M 50/489

(54) **COATED SEPARATOR, AND PREPARATION METHOD THEREFOR AND USE THEREOF**

(30) Priority: 26.06.2024 CN 202410847782
(71) Applicant: Shenzhen Senior Technology Material Co., Ltd., Shenzhen, Guangdong 518106 (CN)
(72) Inventor: QIANG, Li, Shenzhen, Guangdong 518106 (CN); TAN, Bin, Shenzhen, Guangdong 518106 (CN); GU, Jinhui, Shenzhen, Guangdong 518106 (CN); LI, Qiuyi, Shenzhen, Guangdong 518106 (CN); CHEN, Weiyan, Shenzhen, Guangdong 518106 (CN); QIAN, Cheng, Shenzhen, Guangdong 518106 (CN); LIAO, Zhiheng, Shenzhen, Guangdong 518106 (CN)
(74) Representative: J A Kemp LLP
(86) International application number: PCT/CN2025/085038
(87) International publication number: WO 2026/001137

(57) **Abstract**

The present application provides a coated separator, and a preparation method thereof and the use thereof. The coated separator includes a substrate and a coating that coats at least one side of the substrate. Raw materials for the preparation of the coating include an emulsion-type binder, a solvent-type binder and inorganic particles. An average particle diameter of the emulsion-type binder is denoted as A, an average particle diameter of the inorganic particles is denoted as B, an average pore diameter of the substrate is denoted as C, D10 particle diameter of the inorganic particles is denoted as D, and then A, B, C and D satisfy the following relations: C:A:B=(0.4-0.8):1:(2-9); and A+D ≥ 3.5C. In the present application, by the addition of the emulsion-type binder to the preparation raw materials for the coating, the water resistance of the coated separator can be improved, and a ratio of the particle diameter of the emulsion-type binder to the particle diameter of the inorganic particles to the pore diameter of the substrate can be controlled within a specific range, thereby enabling the separator to have a relatively good air permeability.

## Description

### TECHNICAL FIELD

The present application belongs to the technical field of separators, and relates to a coated separator, and a preparation method thereof and use thereof.

### BACKGROUND

In the structure of a lithium-ion battery, the separator is one of key internal components. The performance of the separator determines the interfacial structure, internal resistance and the like of the battery, and directly affects the capacity, cycle life, safety performance and other characteristics of the battery. A separator with excellent performance plays an important role in improving the comprehensive performance of the battery. A main function of the separator is to separate positive and negative electrodes of the battery to prevent short circuit caused by contact between the two electrodes, and it also has the function of allowing electrolyte ions to pass through.

At present, an inorganic coating is often coated on the surface of a base membrane to improve the heat resistance of the separator. However, the inorganic coating reduces the overall air permeability of the separator. Meanwhile, to improve an adhesion between the coated separator and an electrode sheet, a polymer coating is often applied intermittently on the surface of the coated separator. During the application of the polymer coating, water bath is required to solidify the coating. The inorganic coating has poor water resistance, and the inorganic coating may dissolve or powder off during the water bath, resulting in a decrease in the overall heat resistance of the separator.

Therefore, it is expected in the art to develop a coated separator with good water resistance and air permeability.

### SUMMARY

The present application provides a coated separator, and a preparation method thereof and use thereof. The existing separators with high heat resistance formula have weakened heat resistance when exposed to water, and subsequent water bath treatment during secondary aqueous coating or organic solvent-based coating on their surfaces causes performance degradation (such as coating dissolution and powdering off), resulting in a thermal shrinkage rate of the separator higher than 5% at 150°C. In the present application, by compounding an emulsion-type binder and a solvent-type binder during the slurry preparation process, and controlling the ratio of the particle diameter of the emulsion-type binder, the particle diameter of inorganic particles and the pore diameter of the substrate within a specific range, the separator has good air permeability. Meanwhile, the heat resistance of the separator is improved to a certain extent due to the improved water resistance of the inorganic coating. As a further preferred solution, a crosslinking agent is further added to the coating system, and a coating with better water resistance and heat resistance can be formed on the surface of the separator through low-temperature baking, effectively improving the above problems. In addition, the membrane rupture temperature of the crosslinked separator can also be increased, greatly improving the safety performance of the battery.

In a first aspect, the present application provides a coated separator, which includes a substrate and a coating applied on at least one side (e.g., one side or both sides) of the substrate, and raw materials for preparation of the coating include an emulsion-type binder, a solvent-type binder and inorganic particles;

An average particle diameter of the emulsion-type binder is denoted as A, an average particle diameter of the inorganic particles is denoted as B, an average pore diameter of the substrate is denoted as C, and D10 particle diameter of the inorganic particles is denoted as D, and then A, B, C and D satisfy the following relationships: C:A:B=(0.4-0.8):1:(2-9); A+D≥3.5C; where 0.4-0.8 can be, for example, any one of 0.4, 0.5, 0.6, 0.7 or 0.8, or a value within a range between any two of these values; 2-9 can be, for example, any one of 2, 3, 4, 5, 6, 7, 8 or 9, or a value within a range between any two of these values; A+D can be any one of 3.5C, 4C, 4.5C, 5C, 5.5C, 6C, 6.5C, 7C, 7.5C or 8C, or a value within a range between any two of these values.

In the present application, the addition of the emulsion-type binder in the raw materials for preparation of the coating can improve the water resistance of the coated separator. By controlling the ratio of the particle diameter of the emulsion-type binder, the particle diameter of inorganic particles and the pore diameter of the substrate within a specific range, the separator has good air permeability.

If the average particle diameter of the emulsion-type binder is too large, the coating will be insufficiently dense (i.e., the coating cannot cover the entire surface of the substrate), resulting in reduced heat resistance. Meanwhile, an overlarge average particle diameter of the emulsion-type binder will lead to poor self-stability, increased viscosity and poor workability. If the average particle diameter of the emulsion-type binder is too small, it will easily penetrate into the pores of the substrate, causing blockage of the pores of the substrate, affecting the air permeability of the separator, and also affecting the adhesion of the inorganic particles (the binder participating in bonding inorganic particles penetrates into the pores).

Preferably, 3.5C≤A+D≤6C. By controlling A+D to be greater than or equal to 3.5C, the inorganic particles and the emulsion-type binder are not easy to fall into the pores of the substrate. By controlling A+D to be less than or equal to 6C, it is beneficial to control the thickness of the coating, meeting the requirement that the thickness of single-side coating is less than or equal to 1.2 µm and realizing lightweight and thinning.

Preferably, the emulsion-type binder includes any one of polyacrylate, polystyrene-acrylate, polymethyl methacrylate, polybutyl methacrylate, polyethyl acrylate, polyvinyl acetate or ethylene-vinyl acetate, or a combination of at least two of them.

Preferably, the molecular structure of the solvent-type binder contains a carboxyl group and/or an amide group.

Preferably, the solvent-type binder includes polyacrylic acid and/or polyacrylamide.

Preferably, an average particle diameter (D50) of the inorganic particles is 0.1-1.0 µm, for example, any one of 0.1 µm, 0.2 µm, 0.3 µm, 0.4 µm, 0.5 µm, 0.6 µm, 0.7 µm, 0.8 µm, 0.9 µm or 1.0 µm, or a value within a range between any two of these values.

It can be understood that the particle diameters D10 and D50 of the inorganic particles in the present application can be determined by measuring the inorganic particle powder using an Omec LS609 laser particle size analyzer, selecting the refractive index corresponding to the material to obtain a cumulative particle diameter distribution of the inorganic particle powder, where the particle diameter at which the cumulative volume from the smallest particles reaches 10% is recorded as D10, and that at 50% is recorded as D50. The particle diameter of the emulsion-type binder can be measured by measuring the emulsion using an Omec TOPSIZER laser particle size analyzer, and selecting the refractive index corresponding to the material to obtain a cumulative particle diameter distribution of the emulsion, where the particle diameter at which a cumulative volume from the smallest particles reaches 50% is recorded as the average particle diameter of the emulsion-type binder. Of course, other instruments and equipment can also be used for measuring, and the present application is not limited thereto.

Preferably, the inorganic particles include any one of aluminum oxide, boehmite, barium titanate, silicon dioxide, magnesium oxide, titanium dioxide or double metal hydroxide, or a combination of at least two of them.

Preferably, the double metal hydroxide comprises any one of magnesium-aluminum double metal hydroxide, lithium-aluminum double metal hydroxide (LiAl-LDH), zinc-aluminum double metal hydroxide or nickel-aluminum double metal hydroxide, or a combination of at least two of them.

Preferably, the inorganic particles are porous inorganic particles, e.g., LiAl-LDH. Porous inorganic particles can further improve the air permeability and wettability of the coated separator.

Preferably, the raw materials for preparation of the coating further include a crosslinking agent.

As a preferred technical solution of the present application, a crosslinking agent is added to the raw materials for preparation of the coating. The solvent-type binder and the crosslinking agent can undergo a crosslinking reaction (the emulsion-type binder does not participate in the crosslinking reaction) under conventional baking conditions (i.e., the baking temperature of 60-80°C below) for coated separators to form a crosslinked network structure. The formed organic crosslinked skeleton can improve the heat resistance of the coated separator. At the water bath stage of the organic solvent-based coating process, the crosslinked coated separator will not have obvious powdering off after passing through the water bath tank, and the thermal shrinkage of the coating at 150°C is ≤5%. Meanwhile, the membrane rupture temperature of the crosslinked coated separator is also improved to a certain extent, greatly improving the safety performance of the battery.

That is, the addition of a crosslinking agent can further improve the water resistance and heat resistance of the coated separator, and the above effects can be achieved with a small coating amount.

Preferably, the crosslinking agent includes a carboxyl crosslinking agent.

Preferably, a functionality of the crosslinking agent is 2-4, e.g., 2, 2.2, 2.4, 2.6, 2.8, 3, 3.2, 3.4, 3.6, 3.8 or 4, etc. A crosslinking agent with a functionality above 2 can undergo three-dimensional structure crosslinking, and the higher the functionality or the more crosslinking agent added, the higher the crosslinking degree. A crosslinking agent with a functionality higher than 4 has no obvious effect on improving the crosslinking degree due to steric hindrance, and has no obvious improvement on the performance of the separator product. Meanwhile, due to the excessively high functionality, the crosslinking agent has too high activity, which may cause premature crosslinking and make the molecular chain less likely to adsorb and spread on the surface of inorganic particles, resulting in reduced adhesion effect. In addition, due to the curling of molecular chains and the consumption of carboxyl groups, its solubility in water decreases, the slurry viscosity decreases, leading to increased production cost and difficulty.

Preferably, the crosslinking agent includes any one of blocked isocyanate crosslinking agent, carbodiimide crosslinking agent, aziridine crosslinking agent or epoxy silane crosslinking agent, or a combination of at least two of them. It should be understood that the carbodiimide, aziridine and epoxy silane here refer to polymers containing corresponding functional groups and usable as crosslinking agents.

Preferably, the crosslinking agent includes aziridine-modified isocyanate.

Preferably, the raw materials for preparation of the coating further include any one of water, a dispersant or a surfactant, or a combination of at least two of them.

Preferably, the water includes pure water.

Preferably, the dispersant includes any one of ammonium polyacrylate, sodium tripolyphosphate, sodium hexametaphosphate or sodium pyrophosphate, or a combination of at least two of them.

Preferably, the surfactant includes any one of polyether silane copolymer, polyether-modified polysiloxane, alkylphenol polyoxyethylene ether, fatty alcohol polyoxyethylene ether, fatty acid polyoxyethylene ether, fatty amine polyoxyethylene ether or fluoroalkyl ethoxy alcohol ether, or a combination of at least two of them.

Preferably, the raw materials for preparation of the coating include the following components in parts by weight:
Water: 60-85 parts;
Inorganic particles: 20-40 parts;
Dispersant: 0.8-1.2 parts;
Emulsion-type binder: 0.1-3 parts;
Solvent-type binder: 0.2-1.5 parts;
Crosslinking agent: 0.01-0.2 parts; and
Surfactant: 0.05-1 part.

Preferably, based on parts by weight of the raw materials for preparation of the coating, an amount of the water can be, for example, any one of 60 parts, 62 parts, 64 parts, 66 parts, 68 parts, 70 parts, 72 parts, 74 parts, 76 parts, 78 parts, 80 parts, 82 parts, 84 parts or 85 parts, or a value within a range between any two of these values.

Preferably, based on parts by weight of the raw materials for preparation of the coating, an amount of the inorganic particles can be any one of 20 parts, 22 parts, 24 parts, 26 parts, 28 parts, 30 parts, 32 parts, 34 parts, 36 parts, 38 parts or 40 parts, or a value within a range between any two of these values.

Preferably, based on parts by weight of the raw materials for preparation of the coating, an amount of the dispersant can be, for example, any one of 0.8 parts, 0.9 parts, 1 part, 1.1 parts or 1.2 parts, or a value within a range between any two of these values.

Preferably, based on parts by weight of the raw materials for preparation of the coating, an amount of the emulsion-type binder can be, for example, any one of 0.1 parts, 0.3 parts, 0.5 parts, 0.8 parts, 1 part, 1.2 parts, 1.4 parts, 1.6 parts, 1.8 parts, 2 parts, 2.2 parts, 2.4 parts, 2.6 parts, 2.8 parts or 3 parts, or a value within a range between any two of these values.

Preferably, based on parts by weight of the raw materials for preparation of the coating, an amount of the solvent-type binder can be, for example, any one of 0.2 parts, 0.3 parts, 0.4 parts, 0.5 parts, 0.6 parts, 0.7 parts, 0.8 parts, 0.9 parts, 1 part, 1.1 parts, 1.2 parts, 1.3 parts, 1.4 parts or 1.5 parts, or a value within a range between any two of these values.

Preferably, based on parts by weight of the raw materials for preparation of the coating, an amount of the crosslinking agent can be, for example, any one of 0.01 parts, 0.02 parts, 0.03 parts, 0.04 parts, 0.05 parts, 0.06 parts, 0.07 parts, 0.08 parts, 0.09 parts, 0.1 parts, 0.11 parts, 0.12 parts, 0.13 parts, 0.14 parts, 0.15 parts, 0.16 parts, 0.17 parts, 0.18 parts, 0.19 parts or 0.2 parts, or a value within a range between any two of these values.

Preferably, based on parts by weight of the raw materials for preparation of the coating, an amount of the surfactant can be, for example, any one of 0.05 parts, 0.06 parts, 0.07 parts, 0.08 parts, 0.09 parts, 0.1 parts, 0.2 parts, 0.3 parts, 0.4 parts, 0.5 parts, 0.6 parts, 0.7 parts, 0.8 parts, 0.9 parts or 1 parts, or a value within a range between any two of these values.

Preferably, a mass ratio of the emulsion-type binder to the solvent-type binder is 3:(0.5-3), where 0.5-3 can be, for example, any one of 0.5, 0.6, 0.7, 0.8, 0.9, 1, 1.2, 1.4, 1.6, 1.8, 2, 2.2, 2.4, 2.6, 2.8 or 3, or a value within a range between any two of these values.

Preferably, a mass ratio of the solvent-type binder to the crosslinking agent is 100:(3-12), where 3-12 can be, for example, any one of 3, 4, 5, 6, 7, 8, 9, 10, 11 or 12, or a value within a range between any two of these values.

Preferably, a total coating amount of the coating is 2.4-3.2 g/m², e.g., any one of 2.4 g/m², 2.5 g/m², 2.6 g/m², 2.7 g/m², 2.8 g/m², 2.9 g/m², 3 g/m², 3.1 g/m² or 3.2 g/m², or a value within a range between any two of these values.

Preferably, a single-side thickness of the coating is 0.5-4 µm, e.g., any one of 0.5 µm, 0.8 µm, 1 µm, 1.2 µm, 1.4 µm, 1.6 µm, 1.8 µm, 2 µm, 2.2 µm, 2.4 µm, 2.6 µm, 2.8 µm, 3 µm, 3.2 µm, 3.4 µm, 3.6 µm, 3.8 µm or 4 µm, or a value within a range between any two of these values.

Preferably, the substrate can be a PP base membrane, a PE base membrane or a PP/PE/PP composite base membrane, etc.

In a second aspect, the present application provides a preparation method of the coated separator according to the first aspect, including the following steps:
(1) mixing the raw materials for preparation of the coating to obtain a slurry;
(2) coating the slurry on one or both sides of the base membrane and baking to obtain the coated separator.

Preferably, step (1) specifically includes the following steps:
mixing water and a dispersant, then adding inorganic particles for dispersion, then adding an emulsion-type binder, a solvent-type binder, a crosslinking agent and a surfactant, and dispersing uniformly to obtain a slurry;

Preferably, after adding the inorganic particles for dispersion, a step of sand milling is further included;

Preferably, a flow rate of the sand milling is 800-1200 L/h, e.g., any one of 800 L/h, 850 L/h, 900 L/h, 950 L/h, 1000 L/h, 1050 L/h, 1100 L/h, 1150 L/h or 1200 L/h, or a value within a range between any two of these values; a rotation speed of the sand milling is 700-800 rpm, e.g., any one of 700 rpm, 720 rpm, 740 rpm, 760 rpm, 780 rpm or 800 rpm, or a value within a range between any two of these values.

Preferably, the addition of the emulsion-type binder, solvent-type binder, crosslinking agent and surfactant specifically refers to adding the four raw materials in sequence, with each subsequent raw material being added only after the previous one has been uniformly dispersed (e.g., adding the emulsion-type binder, and then adding the solvent-type binder only after it is uniformly dispersed).

Preferably, a coating method in step (2) includes coating with a micro-gravure roller.

Preferably, a temperature for the baking is 60-80°C, e.g., any one of 60°C, 62°C, 64°C, 66°C, 68°C, 70°C, 72°C, 74°C, 76°C, 78°C or 80°C, or a value within a range between any two of these values.

Preferably, time for the baking is 10-30 s, e.g., any one of 10 s, 12 s, 14 s, 16 s, 18 s, 20 s, 22 s, 24 s, 26 s, 28 s or 30 s, or a value within a range between any two of these values.

In a third aspect, the present application provides use of the coated separator according to the first aspect in a battery.

Compared with the prior art, the present application has at least the following beneficial effects:
In the present application, the addition of the emulsion-type binder in the raw materials for preparation of the coating can improve water resistance of the coated separator, and controlling a ratio of the particle diameter of the emulsion-type binder, the particle diameter of the inorganic particles and the pore diameter of the substrate within a specific range makes the separator have good air permeability.

### DETAILED DESCRIPTION OF EMBODIMENTS

The technical solutions of the present application are further illustrated by the following specific embodiments. Those skilled in the art should understand that the embodiments are only for helping understand the present application and should not be regarded as specific limitations to the present application.

### Example 1

This example provides a coated separator, which includes a substrate and coatings coated on both sides of the substrate. The raw materials for preparation of the coating include the following components in parts by weight:
pure water: 70 parts;
inorganic particles: 30 parts;
dispersant: 1 part;
emulsion-type binder: 1.5 parts;
solvent-type binder: 0.3 parts;
crosslinking agent: 0.03 parts; and
surfactant: 0.5 parts;
where specific selection and parameters of each raw material are shown in Table 1.

The preparation method includes the following steps:
(1) mixing the raw materials for preparation of the coating according to the formula to obtain a slurry;
(2) coating the slurry on both sides of the base membrane with a micro-gravure roller, and baking at 70°C for 20 s to obtain the coated separator.

### Examples 2-12

Examples 2-12 each provide a coated separator. The material and parameters of the substrate for the coated separator, the specific selection, parameters and amount (parts by weight) of the raw materials for preparation of the coating, the preparation method and other parameters are shown in Table 1 and Table 2. For the contents not shown in Table 1 and Table 2, they are the same as those in Example 1.

### Comparative Examples 1-4

Comparative Examples 1-4 each provide a coated separator. The material and parameters of the substrate for the coated separator, the specific selection, parameters and amount (parts by weight) of the raw materials for preparation of the coating, the preparation method and other parameters are shown in Table 3. For the contents not shown in Table 3, they are the same as those in Example 1.

**Table 1**

| | | Example 1 | Example 2 | Example 3 | Example 4 | Example 5 | Example 6 |
|---|---|---|---|---|---|---|---|
| Pure water | | 70 | 60 | 85 | 70 | 70 | 70 |
| Inorganic particle | Aluminum oxide | 30 | 20 | 40 | 30 | 30 | 30 |
| | Boehmite | \ | \ | \ | \ | \ | \ |
| | Average particle diameter, B (nm) | 242 | 242 | 242 | 242 | 242 | 242 |
| | D10 particle diameter, D (nm) | 118 | 118 | 118 | 118 | 118 | 118 |
| | Grade | Xinke Zhonglian New Materials Co., Ltd. XKA243 | Xinke Zhonglian New Materials Co., Ltd. XKA243 | Xinke Zhonglian New Materials Co., Ltd. XKA243 | Xinke Zhonglian New Materials Co., Ltd. XKA243 | Xinke Zhonglian New Materials Co., Ltd. XKA243 | Xinke Zhonglian New Materials Co., Ltd. XKA243 |
| Dispersant | Ammonium polyacrylate | 1 | 0.8 | 1.2 | 1 | 1 | 1 |
| | Grade | San NopcoDS-5 60 | San NopcoDS-5 60 | San NopcoDS-5 60 | San NopcoDS-5 60 | San NopcoDS-5 60 | San NopcoDS-5 60 |
| Emulsion-type binder | Polyacrylate | 1.5 | 0.2 | 3 | 1 | 0.5 | 1.5 |
| | Polystyrene-acrylate | \ | \ | \ | \ | \ | \ |
| | Average particle diameter, A (nm) | 92 | 92 | 92 | 92 | 92 | 92 |
| | Grade | Zhuhai Chenyu New Material Technology Co., Ltd. CYJ-5088A | Zhuhai Chenyu New Material Technology Co., Ltd. CYJ-5088A | Zhuhai Chenyu New Material Technology Co., Ltd. CYJ-5088A | Zhuhai Chenyu New Material Technology Co., Ltd. CYJ-5088A | Zhuhai Chenyu New Material Technology Co., Ltd. CYJ-5088A | Zhuhai Chenyu New Material Technology Co., Ltd. CYJ-5088A |
| Solvent-type binder | Polyacrylic acid | 0.3 | 0.2 | 1.5 | 0.4 | 0.3 | 0.3 |
| | Grade | Hunan Gaorui Power Materials Co., Ltd. GR-506 | Hunan Gaorui Power Materials Co., Ltd. GR-506 | Hunan Gaorui Power Materials Co., Ltd. GR-506 | Hunan Gaorui Power Materials Co., Ltd. GR-506 | Hunan Gaorui Power Materials Co., Ltd. GR-506 | Hunan Gaorui Power Materials Co., Ltd. GR-506 |
| Crosslinking agent | Aziridine-modified isocyanate | 0.03 | 0.02 | 0.15 | 0.012 | 0.015 | 0.03 |

| | Grade | Dongguan Winway Chemical Co., Ltd. YC-300 | Dongguan Winway Chemical Co., Ltd. YC-300 | Dongguan Winway Chemical Co., Ltd. YC-300 | Dongguan Winway Chemical Co., Ltd. YC-300 | Dongguan Winway Chemical Co., Ltd. YC-300 | Dongguan Winway Chemical Co., Ltd. YC-300 |
|---|---|---|---|---|---|---|---|
| Surfactant | Polyether silane copolymer | 0.5 | 0.05 | 1 | 0.5 | 0.5 | 0.5 |
| | Grade | Hunan Guangxin Technology Co., Ltd. YDP-2129 | Hunan Guangxin Technology Co., Ltd. YDP-2129 | Hunan Guangxin Technology Co., Ltd. YDP-2129 | Hunan Guangxin Technology Co., Ltd. YDP-2129 | Hunan Guangxin Technology Co., Ltd. YDP-2129 | Hunan Guangxin Technology Co., Ltd. YDP-2129 |
| Substrate | Material | PE | PE | PE | PE | PE | PE |
| | Thickness | 5.48 | 5.48 | 5.48 | 5.48 | 5.48 | 5.48 |
| | Average pore diameter, C (nm) | 50 | 50 | 50 | 50 | 50 | 50 |
| Single- or double-side coating | | Double | Double | Double | Double | Double | Single |
| Single-side coating thickness (µm) | | 1.02 | 1.11 | 1.03 | 1.01 | 0.97 | 2.03 |
| Total coating amount (g/m²) | | 2.99 | 3.17 | 3.19 | 2.98 | 2.92 | 3.11 |
| Temperature for baking (°C) | | 70 | 60 | 80 | 70 | 70 | 70 |
| Time for baking (s) | | 20 | 10 | 30 | 20 | 20 | 20 |

**Table 2**

| | | Example 7 | Example 8 | Example 9 | Example 10 | Example 11 | Example 12 |
|---|---|---|---|---|---|---|---|
| Pure water | | 70 | 70 | 70 | 70 | 70 | 70 |
| Inorganic particle | Aluminum oxide | 30 | 30 | \ | 30 | 30 | 30 |
| | Boehmite | \ | \ | 30 | \ | \ | \ |
| | Average particle diameter, B (nm) | 242 | 242 | 188 | 242 | 361 | 242 |
| | D10 particle diameter, D (nm) | 118 | 118 | 102 | 118 | 165 | 118 |
| | Grade | Xinke Zhonglian New Materials Co., Ltd. XKA243 | Xinke Zhonglian New Materials Co., Ltd. XKA243 | Anhui Estone Materials Technology Co., Ltd. BG-300 | Xinke Zhonglian New Materials Co., Ltd. XKA243 | Xinke Zhonglian New Materials Co., Ltd. XKA243Y | Xinke Zhonglian New Materials Co., Ltd. XKA243 |
| Dispersant | Ammonium polyacrylate | 1 | 1 | 1 | 1 | 1 | 1 |
| | Grade | San NopcoDS-5 60 | San NopcoDS-5 60 | San NopcoDS-5 60 | San NopcoDS-5 60 | San NopcoDS-5 60 | San NopcoDS-5 60 |
| Emulsion-type | Polyacrylate | 1.5 | \ | 1.5 | 1.5 | 1.5 | 1.5 |
| binder | Polystyrene-acrylate | \ | 1.5 | \ | \ | \ | \ |
| | Average particle diameter, A (nm) | 92 | 98 | 92 | 80 | 92 | 92 |
| | Grade | Zhuhai Chenyu New Material Technology Co., Ltd. CYJ-5088A | Guangzhou Rongdong New Materials Co., Ltd. 8524A | Zhuhai Chenyu New Material Technology Co., Ltd. CYJ-5088A | Guangzhou Rongdong New Materials Co., Ltd. 858 | Zhuhai Chenyu New Material Technology Co., Ltd. CYJ-5088A | Zhuhai Chenyu New Material Technology Co., Ltd. CYJ-5088A |
| Solvent-type binder | Polyacrylic acid | 0.3 | 0.3 | 0.3 | 0.3 | 0.3 | 0.3 |
| | Grade | Hunan Gaorui Power Materials Co., Ltd. GR-506 | Hunan Gaorui Power Materials Co., Ltd. GR-506 | Hunan Gaorui Power Materials Co., Ltd. GR-506 | Hunan Gaorui Power Materials Co., Ltd. GR-506 | Hunan Gaorui Power Materials Co., Ltd. GR-506 | Hunan Gaorui Power Materials Co., Ltd. GR-506 |
| Crosslinking agent | Aziridine-modifie d isocyanate | \ | 0.03 | 0.03 | 0.03 | 0.03 | 0.03 |
| | Grade | \ | Dongguan Winway Chemical Co., Ltd. YC-300 | Dongguan Winway Chemical Co., Ltd. YC-300 | Dongguan Winway Chemical Co., Ltd. YC-300 | Dongguan Winway Chemical Co., Ltd. YC-300 | Dongguan Winway Chemical Co., Ltd. YC-300 |
| Surfactant | Polyether silane copolymer | 0.5 | 0.5 | 0.5 | 0.5 | 0.5 | 0.5 |
| | Grade | Hunan Guangxin Technology Co., Ltd. YDP-2129 | Hunan Guangxin Technology Co., Ltd. YDP-2129 | Hunan Guangxin Technology Co., Ltd. YDP-2129 | Hunan Guangxin Technology Co., Ltd. YDP-2129 | Hunan Guangxin Technology Co., Ltd. YDP-2129 | Hunan Guangxin Technology Co., Ltd. YDP-2129 |
| Substrate | Material | PE | PE | PE | PE | PE | PE |
| | Thickness | 5.48 | 5.48 | 5.48 | 5.48 | 5.48 | 5.48 |
| | Average pore diameter, C (nm) | 50 | 50 | 50 | 50 | 50 | 50 |
| Single- or double-side coating | | Double | Double | Double | Double | Double | Double |
| Single-side coating thickness (µm) | | 0.99 | 1.02 | 1.01 | 0.96 | 1.1 | 0.7 |
| Total coating amount (g/m²) | | 3.03 | 2.99 | 2.2 | 2.94 | 2.89 | 2.4 |
| Temperature for baking (°C) | | 70 | 70 | 70 | 70 | 70 | 70 |
| Time for baking (s) | | 20 | 20 | 20 | 20 | 20 | 20 |

**Table 3**

| | Comparative | Comparative | Comparative | Comparative | |
|---|---|---|---|---|---|
| | | Example 1 | Example 2 | Example 3 | Example 4 |
| Pure water | | 70 | 85 | 70 | 70 |
| Inorganic particle | Aluminum oxide | 30 | 40 | 30 | 30 |
| | Boehmite | \ | \ | \ | \ |
| | Average particle diameter, B (nm) | 242 | 242 | 242 | 242 |
| | D10 particle diameter, D (nm) | 118 | 118 | 118 | 118 |
| | Grade | Xinke Zhonglian New Materials Co., Ltd. XKA243 | Xinke Zhonglian New Materials Co., Ltd. XKA243 | Xinke Zhonglian New Materials Co., Ltd. XKA243 | Xinke Zhonglian New Materials Co., Ltd. XKA243 |
| Dispersant | Ammonium polyacrylate | 1 | 1.2 | 1 | 1 |
| | Grade | San NopcoDS-560 | San NopcoDS-560 | San NopcoDS-560 | San NopcoDS-560 |
| Emulsion-type binder | Polyacrylate | 1.8 | \ | 1.5 | 1.5 |
| | Polystyrene-acrylate | \ | \ | \ | \ |
| | Average particle diameter, A (nm) | 92 | \ | 58 | 375 |
| | Grade | Zhuhai Chenyu New Material Technology Co., Ltd. CYJ-5088A | \ | Hunan Gaorui Power Materials Co., Ltd. GR-401 | Zhuhai Chenyu New Material Technology Co., Ltd. CYJ-5088A-1 |
| Solvent-type binder | Polyacrylic acid | \ | 4.5 | 0.3 | 0.3 |
| | Grade | \ | Hunan Gaorui Power Materials Co., Ltd. GR-506 | Hunan Gaorui Power Materials Co., Ltd. GR-506 | Hunan Gaorui Power Materials Co., Ltd. GR-506 |
| Crosslinking agent | Aziridine-modified isocyanate | \ | 0.15 | 0.03 | 0.03 |
| | Grade | \ | Dongguan Winway Chemical Co., Ltd. YC-300 | Dongguan Winway Chemical Co., Ltd. YC-300 | Dongguan Winway Chemical Co., Ltd. YC-300 |
| Surfactant | Polyether silane copolymer | 0.5 | 1 | 0.5 | 0.5 |
| | Grade | Hunan Guangxin Technology Co., Ltd. YDP-2129 | Hunan Guangxin Technology Co., Ltd. YDP-2129 | Hunan Guangxin Technology Co., Ltd. YDP-2129 | Hunan Guangxin Technology Co., Ltd. YDP-2129 |
| Substrate | Material | PE | PE | PE | PE |
| | Thickness | 5.48 | 5.48 | 5.48 | 5.48 |
| | Average pore diameter, C (nm) | 50 | 50 | 50 | 50 |
| Single- or double-side coating | | Double | Double | Double | Double |
| Single-side coating thickness (µm) | | 1.1 | 1.03 | 1.1 | 1.3 |
| Total coating amount (g/m²) | 3.2 | 3.19 | 2.97 | 2.13 | |
| Temperature for baking (°C) | 70 | 80 | 70 | 70 | |
| Time for baking (s) | 20 | 30 | 20 | 20 | |

The coated separators provided in the examples and comparative examples were tested for performance, and the test methods are as follows:
(1) Shrinkage rate at 150°C: Cut the coated separators provided in the examples and comparative examples into samples of 160mm*130mm, draw a line of 100mm*100mm on the cut samples, pad 11 sheets of A4 paper on the top and bottom thereof, put them into a 150°C oven, and test at 150°C for 30 min;
(2) Water resistance: Weigh one experimental membrane of A4 paper size (210mm*297mm) and record it as X, soak it in 500 mL of pure water for 10 min, take out the coating, dry it and weigh it, and record the weigh as X₁, record the coating loss per unit area G (g/m²) as G=(X-X₁)/0.06237;
(3) Air permeability increment: Use an Asahi EG01-55-1MR film air permeability meter to test the time required for 100 mL of air to pass through the base membrane and the coated separator provided in the present application, and the difference between the time for air to pass through the coated separator and the base membrane being the air permeability increment.

The performance test results are shown in Table 4.

**Table 4**

| | Shrinkage rate at 150°C (%) | | Air permeability increment (s/100mL) | G (g/m²) |
|---|---|---|---|---|
| | TD | MD | | |
| Example 1 | 2 | 1.9 | 21.4 | 0.07 |
| Example 2 | 4.8 | 4.7 | 8.7 | 2.13 |
| Example 3 | 1 | 0.9 | 39 | 0.12 |
| Example 4 | 1.8 | 1.7 | 31.7 | 0.89 |
| Example 5 | 3.7 | 3.4 | 19.8 | 0.64 |
| Example 6 | 2.2 | 1.9 | 24.7 | 0.11 |
| Example 7 | 2.2 | 2.1 | 22.3 | 2.44 |
| Example 8 | 2 | 1.9 | 20.1 | 0.06 |
| Example 9 | 2.2 | 2.3 | 31 | 0.14 |
| Example 10 | 2.2 | 2.2 | 25.3 | 0.19 |
| Example 11 | 2.7 | 2.5 | 18.2 | 0.22 |
| Example 12 | 4.5 | 3.9 | 14.9 | 0.11 |
| Comparative Example 1 | 8.8 | 7.3 | 18.6 | 0.14 |
| Comparative Example 2 | 0.9 | 0.8 | 214 | 2.57 |
| Comparative Example 3 | 1.9 | 1.8 | 70 | 0.17 |
| Comparative Example 4 | 6.7 | 5.3 | 13.7 | 0.18 |

It can be seen from Table 4 that compared with the comparative examples, the coated separators provided in the examples of the present application have good water resistance, heat resistance (shrinkage rate at 150°C, TD: 1%-4.8%, MD: 0.9%-4.7%) and good air permeability (air permeability increment: 8.7-39 s/100mL) under the condition of small coating thickness (thin coating layer).

Compared with Example 1, the coated separator provided in Comparative Example 1 has poor heat resistance; the coated separator provided in Comparative Example 3 has poor air permeability; the coated separator provided in Comparative Example 4 has significantly poor heat resistance. Compared with Example 3, the coated separator provided in Comparative Example 2 has significantly poor air permeability and water resistance.

The applicant declares that the present application illustrates the coated separator, preparation method thereof and use thereof through the above examples, but the present application is not limited to the above examples, that is, it does not mean that the present application must rely on the above examples to be implemented. Those skilled in the art should understand that any improvement to the present application, equivalent replacement of each raw material of the product of the present application, addition of auxiliary components, selection of specific methods, etc., all fall within the protection scope and disclosure scope of the present application.

## Claims

1. A coated separator, comprising a substrate and a coating applied on at least one side of the substrate, wherein raw materials for preparation of the coating comprise an emulsion-type binder, a solvent-type binder and inorganic particles;
an average particle diameter of the emulsion-type binder is denoted as A, an average particle diameter of the inorganic particles is denoted as B, an average pore diameter of the substrate is denoted as C, and D10 particle diameter of the inorganic particles is denoted as D, and then A, B, C and D satisfy the following relationships: C:A:B=(0.4-0.8):1:(2-9); A+D≥3.5C.

2. The coated separator according to claim 1, wherein 3.5C≤A+D≤6C.

3. The coated separator according to claim 1 or 2, wherein the emulsion-type binder comprises any one of polyacrylate, polystyrene-acrylate, polymethyl methacrylate, polybutyl methacrylate, polyethyl acrylate, polyvinyl acetate or ethylene-vinyl acetate, or a combination of at least two of them.

4. The coated separator according to any one of claims 1-3, wherein a molecular structure of the solvent-type binder contains a carboxyl group and/or an amide group;
preferably, the solvent-type binder comprises polyacrylic acid and/or polyacrylamide.

5. The coated separator according to any one of claims 1-4, wherein the average particle diameter of the inorganic particles is 0.1-1.0 µm;
preferably, the inorganic particles comprise any one of aluminum oxide, boehmite, barium titanate, silicon dioxide, magnesium oxide, titanium dioxide or double metal hydroxide, or a combination of at least two of them;
preferably, the double metal hydroxide comprises any one of magnesium-aluminum double metal hydroxide, lithium-aluminum double metal hydroxide, zinc-aluminum double metal hydroxide or nickel-aluminum double metal hydroxide, or a combination of at least two of them;
preferably, the inorganic particles are porous inorganic particles.

6. The coated separator according to any one of claims 1-5, wherein the raw materials for preparation of the coating further comprise a crosslinking agent.

7. The coated separator according to claim 6, wherein the crosslinking agent comprises a carboxyl crosslinking agent;
preferably, a functionality of the crosslinking agent is 2-4;
preferably, the crosslinking agent comprises any one of blocked isocyanate crosslinking agent, carbodiimide crosslinking agent, aziridine crosslinking agent or epoxy silane crosslinking agent, or a combination of at least two of them;
preferably, the crosslinking agent comprises aziridine-modified isocyanate.

8. The coated separator according to any one of claims 1-7, wherein the raw materials for preparation of the coating further comprise any one of water, a dispersant or a surfactant, or a combination of at least two of them.

9. The coated separator according to claim 8, wherein the water comprises pure water;
preferably, the dispersant comprises any one of ammonium polyacrylate, sodium tripolyphosphate, sodium hexametaphosphate or sodium pyrophosphate, or a combination of at least two of them;
preferably, the surfactant comprises any one of polyether silane copolymer, polyether-modified polysiloxane, alkylphenol polyoxyethylene ether, fatty alcohol polyoxyethylene ether, fatty acid polyoxyethylene ether, fatty amine polyoxyethylene ether or fluoroalkyl ethoxy alcohol ether, or a combination of at least two of them.

10. The coated separator according to any one of claims 1-9, wherein the raw materials for preparation of the coating comprise the following components in parts by weight:
water: 60-85 parts;
inorganic particles: 20-40 parts;
dispersant: 0.8-1.2 parts;
emulsion-type binder: 0.1-3 parts;
solvent-type binder: 0.2-1.5 parts;
crosslinking agent: 0.01-0.2 parts; and
surfactant: 0.05-1 part.

11. The coated separator according to any one of claims 1-10, wherein a mass ratio of the emulsion-type binder to the solvent-type binder is 3:(0.5-3);
preferably, a mass ratio of the solvent-type binder to the crosslinking agent is 100:(3-12).

12. The coated separator according to any one of claims 1-11, wherein a total coating amount of the coating is 2.4-3.2 g/m²;
preferably, a single-side thickness of the coating is 0.5-4 µm.

13. A preparation method of the coated separator according to any one of claims 1-12, comprising the following steps:
(1) mixing the raw materials for preparation of the coating to obtain a slurry;
(2) coating the slurry on one or both sides of a base membrane and baking to obtain the coated separator.

14. The preparation method according to claim 13, wherein a coating method in step (2) comprises coating with a micro-gravure roller;
preferably, a temperature for baking is 60-80°C;
preferably, time for baking is 10-30 s.

15. Use of the coated separator according to any one of claims 1-12 in a battery.
